# EUROPEAN PATENT APPLICATION

(11) **EP 1 505 193 A2**
(43) Date of publication of application: **09.02.2005**
(21) Application number: 04251687.2
(22) Date of filing: 24.03.2004
(51) Int. Cl.: D06F 39/08, D06F 35/00

(54) **Washing machine**

(30) Priority: 07.08.2003 KR 2003054709
(71) Applicant: Samsung Electronics Co., Ltd., Suwon-si, Gyeonggi-Do 442-742 (KR)
(72) Inventor: Kim, Hyun-Sook, Suwon City, Kyungki-Do (KR); Kim, Hyung-Gyoon 219-803 WoncheonJoogon 2nd Apt, Suwon-city, Kyungki-do (KR); Pyo, Sang-Yeon, Suwon-City, Kyungki-Do (KR); Park, Seon-Woo, Suwon-City, Kyungki-Do (KR); Park, Jae-Ryong, Paldal-Gu, Suwon-City, Kyungki-Do (KR); Oak, Seong-Min, Masan-city, Kyungsangnam-Do (KR); Yang, Byoung-Yull, Danwon-Gu, Ansan-City, Kyungki-Do (KR); Yang, Hye-Soon, Yongin-City, Kyungki-Do (KR)
(74) Representative: Grey, Ian Michael

(57) **Abstract**

A washing machine including a tub containing a rotatably mounted drum to receive laundry to be washed and a water supply unit operable to supply water for washing to the tub. The water supply unit is configured to supply water directly into the drum and the washing machine includes a controller to control the separate supply of water into the tub and directly into the drum.

## Description

The present invention relates to a washing machine including a tub containing a rotatably mounted drum to receive laundry to be washed and a water supply unit operable to supply water for washing to the tub. The invention also relates to a method of controlling a washing machine.

A conventional washing machine includes a rotatably mounted drum to receive laundry which is washed in water containing detergent as the drum rotates to agitate the laundry contained therein. The drum is provided with a plurality of perforations and is rotatably mounted in a tub which receives wash water during a wash cycle.

A conventional washing machine is supplied with sufficient water to fill the space between the inner surface of the tub and the outer surface of the rotary drum and also to immerse laundry contained in the drum.

Therefore a problem with this type of conventional drum washing machine is that an excessive amount of water is required because water supplied to the tub flows into the drum from the tub to immerse the laundry contained in the drum.

Furthermore, as an excessive amount of water is required, it takes a relatively long time to supply water to the drum and to drain it therefrom. A conventional washing machine is also inefficient because an electric heater is used to heat an excessive amount of water.

A washing machine according to the invention is characterised in that the water supply unit is also configured to separately supply water directly into the drum, the washing machine including a controller to control the separate supply of water into the tub and directly into the drum.

Preferably, the drum is configured so that water drains from the drum into the tub when a predetermined rotational speed has been reached, the controller being operable to rotate the drum at a speed slower than the predetermined speed to soak laundry placed in the drum in the water supplied directly to the drum and to prevent water supplied directly to the drum from draining into the tub.

In a preferred embodiment, the controller is operable to rotate the drum at a speed exceeding the predetermined speed so that water supplied directly to the drum is drained into the tub to mix with the water supplied to the drum.

Conveniently, the controller is operable to rotate the drum at a speed exceeding the predetermined speed after the drum has been rotated at a speed less than the predetermined speed for a predetermined period of time.

A method of controlling a washing machine is characterised according to the invention by the step of controlling the water supply unit to supply water directly into the drum.

Embodiments of the invention will now be described, by way of example only, and in conjunction with the accompanying drawings, in which:
Figure 1 is a cross-sectional view illustrating the internal structure of a drum washing machine according to an embodiment of the present invention;
Figure 2A is a view illustrating a state in which water is drained by rotating a rotary drum at high speed according to the present invention;
Figure 2B is a view illustrating a state in which water is sprayed into the drum according to the present invention;
Figure 3 is a perspective view illustrating the drum of the washing machine of Figure 1;
Figure 4 is a sectional view of the drum of Figure 3;
Figure 5 is a block diagram of the washing machine of Figure 1;
Figure 6 is a flowchart illustrating a method of controlling the washing machine of Figure 1; and
Figure 7 is a graph showing variations of water temperature while the washing machine performs a wash cycle.

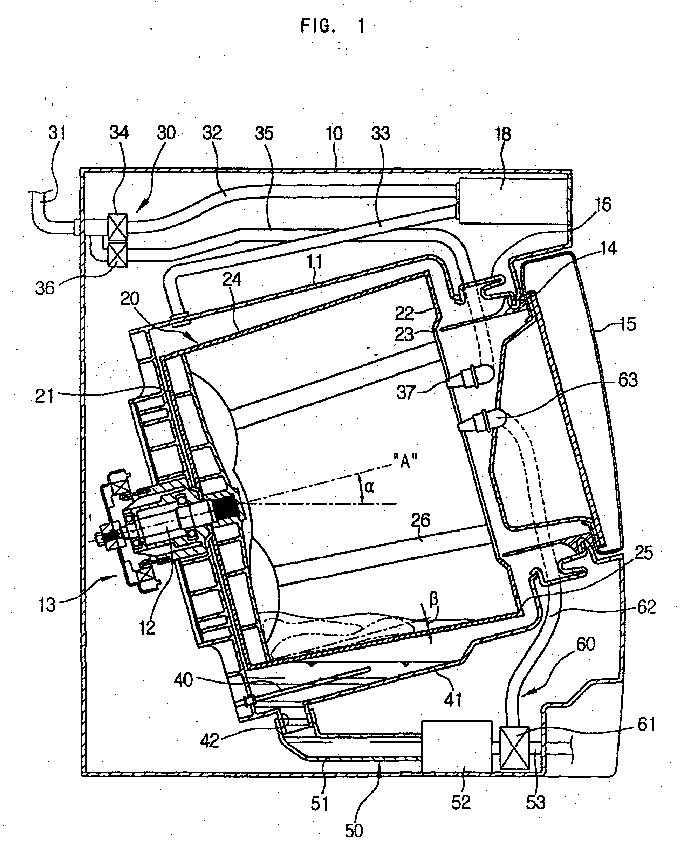

A washing machine according to the present invention is shown in Figure 1 and includes a tub 11 located in a housing 10 and a drum 20 rotatably mounted in the tub 11.

The tub 11 and drum 20 are inclined at an angle of α degrees relative to the horizontal so that the drum is rotatably about an axis 'A' in Figure 1. The drum 20 has a front wall 22 in which an opening 23 is formed to enable laundry to be placed into, and removed from, the drum.

A motor 13 is mounted to the outer surface of the back of the tub 11 and is operable to rotate a shaft 12 connected to the drum 20 so as to rotate the drum in response to operation of the motor 13 in alternate directions.

An opening 14 is formed in the front of the housing 10 to allow the laundry to be put into and taken out of the drum 20 via the opening 23 in the drum 20 and a door 15 is hingedly mounted on the housing to enable the opening 14,23 to be opened and closed. To prevent leakage, cylindrically shaped bellows 16 are provided around the body opening 14 of the body 10 to form a seal with the door 15 when closed.

A detergent container 18 and a water supplier 30 to supply water to be used in the wash cycle is disposed above the tub 11.

The water supplier 30 includes a first water supply pipe 32 connecting an outside water supply pipe 31 to the detergent container 18, a second water supply pipe 33 connecting the detergent container 18 to the tub 11, and a first water supply valve 34 placed on the first water supply pipe 32 to control the flow of water. When water is supplied to the tub 11, it first passes through the detergent container 18 so that the detergent contained therein is supplied to the tub 11 together with the water. The water supplier 30 further includes a third water supply pipe 35 branched off from the first water supply pipe 32, a second water supply valve 36 on the third water supply pipe 35, and a spray nozzle 37 located at the free end of the third water supply pipe 35 to spray wash water directly into the drum 20.

An electric heater 40 and a heater accommodating part 41 are provided in a lower portion of the tub 11.

The drum washing machine further includes a drain unit 50 to drain water from the tub 11, and a circulator 60 to supply wash water heated by the heater 40 from the tub 11 into the drum 20. The drain unit 50 includes a first drain pipe 51 connected to a drain outlet 42 formed in the heater accommodating part 41 to guide wash water into the tub 11, a pump motor 52 on the drain pipe 51, and a second drain pipe 53 connected to an exit side of the pump motor 52. The circulator 60 includes a drain valve 61 on the second drain pipe 53, a circulation pipe 62 extended from the drain valve 61 to the opening 23 of the drum 20, and a spray nozzle 63 located at an exit of the circulation pipe 62 to spray water into the drum 20.

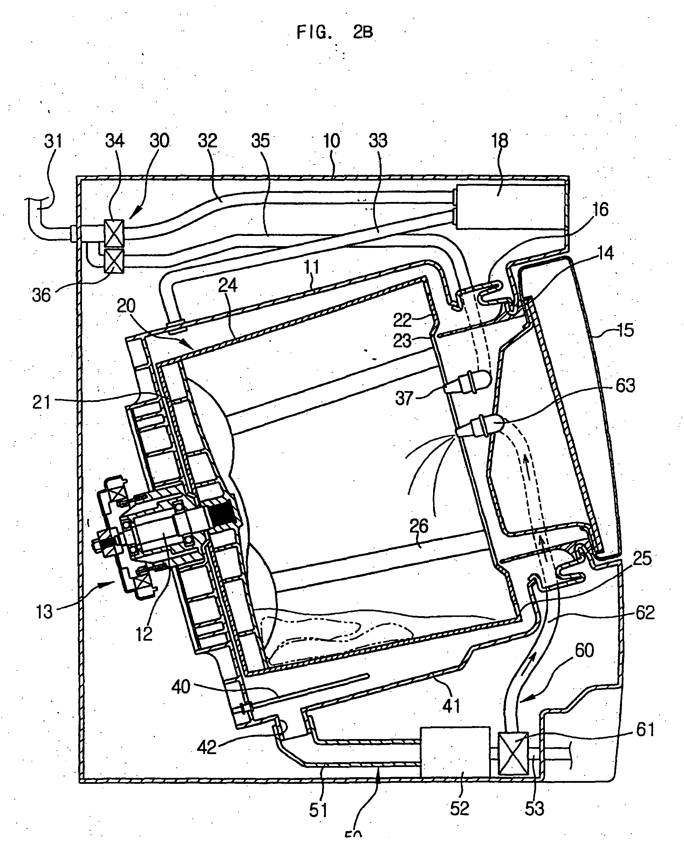

The drain valve 61 changes flow passages to allow water to be drained from the exit of the pump motor 52 to outside or, to flow into the circulation pipe 62. The drain valve 61 may be a general electromotive three-way valve. This construction allows water contained in the lower portion of the tub 11 to be sprayed into the drum 20 through the first drain pipe 51 and the circulation pipe 62 when the pump motor 52 is operated after the drain valve 61 is activated to allow water to flow into the circulation pipe 62 (see Figure 2B). In contrast, the construction allows water to be drained outside when the pump motor 52 is operated after the drain valve 61 is activated to allow water to flow to the second drain pipe 53.

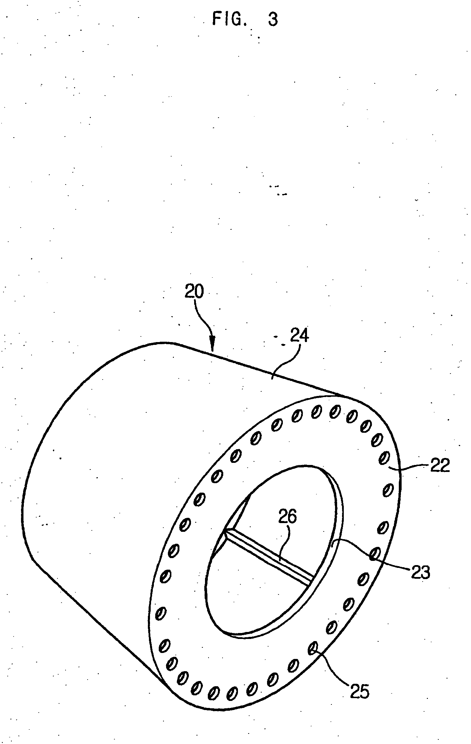

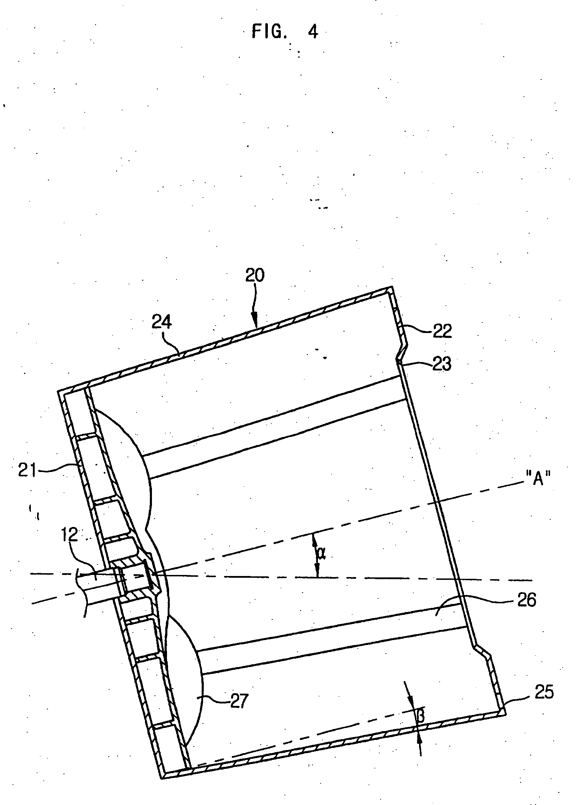

As shown in Figures 3 and 4, the drum includes a back wall 21 coupled to a shaft 12 and a cylindrically shaped sidewall 24 extending between the front wall 22and the back wall 21, respectively.

The back wall 21 and the cylindrically shaped sidewall 24 form a closed space which can fill with water for washing. The sidewall 24 is formed so that its inner diameter becomes larger in a direction from the back wall 21 towards the front wall 22, its surface forming an inclination of β degrees with respect to the axis of rotation A. A plurality of perforations 25 are formed along a radially outer portion of the front wall 22 of the drum to allow water to be drained therefrom when the drum 20 rotates at high speed. Additionally, a plurality of lifters 26 are arranged on the inner surface of the sidewall of the drum 20 to agitate laundry.

As the axis "A" of rotation of the rotary drum 20 is set at an angle of inclination of α degrees relative to the horizontal, the laundry may be soaked with a small amount of water.

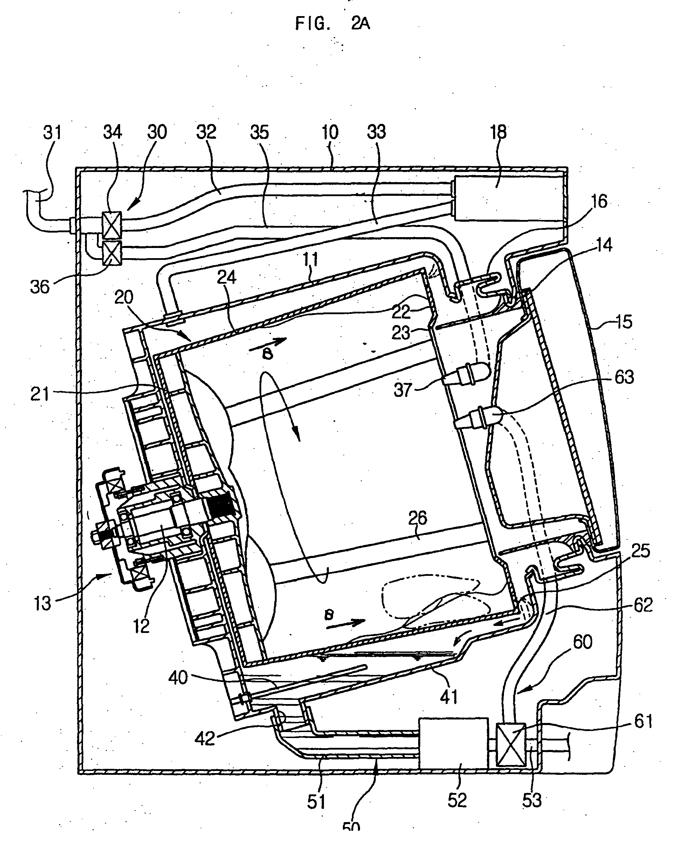

The inner surface of sidewall 24 of the drum 20 is inclined at β degrees relative to the axis "A" of rotation of the drum 20 and the front wall 22 of the rotary drum 20 is provided with the perforations 25 along the radially outer portion thereof, so that, when the drum 20 rotates at high speed, water moves towards the front wall 22 of the drum 20, in the direction of arrow "B" in Figure 2A, due to centrifugal force and so flows through the perforations 25 in the front wall 22 out of the drum 20 into the tub 11, as shown in Figure 2A.

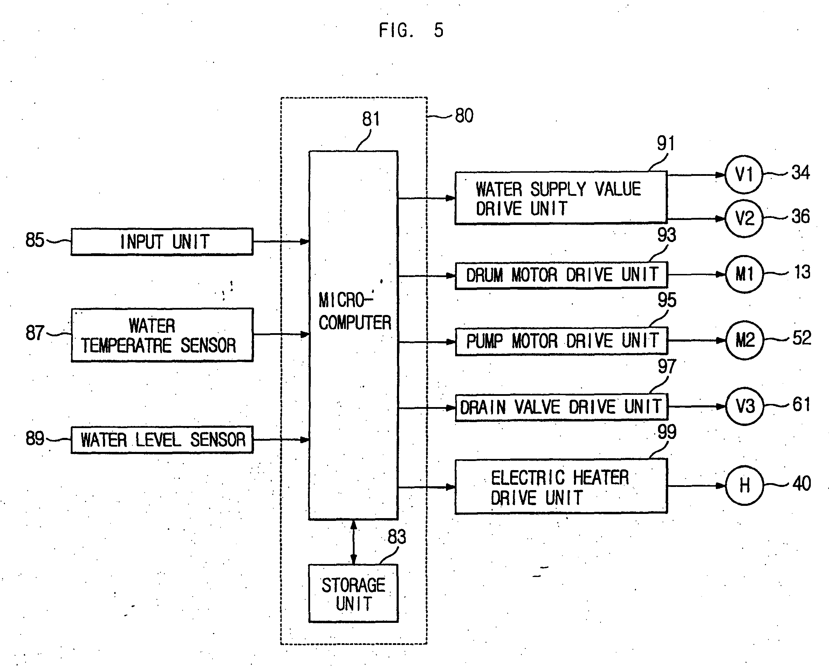

Figure 5 is a block diagram of the drum washing machine of Figure 1.

The present invention includes a controller 80 that controls the overall operation of the washing machine and includes a microcomputer 81 and a storage unit 82. The storage unit 83 stores information about set temperatures corresponding to a plurality of wash cycles. In this case, set temperatures are applied to wash cycles in which laundry is washed using water heated by the electric heater. The microcomputer 81 recognizes a set temperature corresponding to a wash cycle set by a user by locating the information stored in the storage unit.

An input terminal of the microcomputer 81 is connected to an input unit 85 to receive input commands set by the user, including an input command used to set a desired wash cycle, a water temperature sensor 87 and a water level sensor 89, which are arranged at appropriate locations inside of the tub, to detect the temperature and level of water contained in the tub, respectively.

An output terminal of the microcomputer 81 is connected to a water supply valve drive unit 91 to drive the first and second valves 34,35, a drum motor drive unit 93 to drive the drum motor 13, a pump motor drive unit 95 to drive the pump motor 52, a drain valve drive unit 97 to drive the drain valve 61, and an electric heater drive unit 99 to drive the electric heater 40.

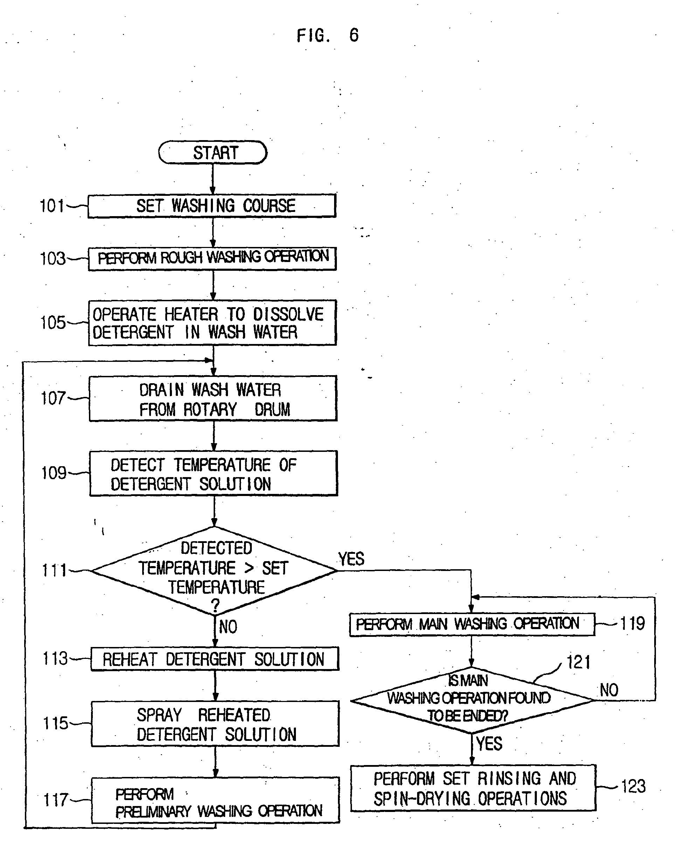

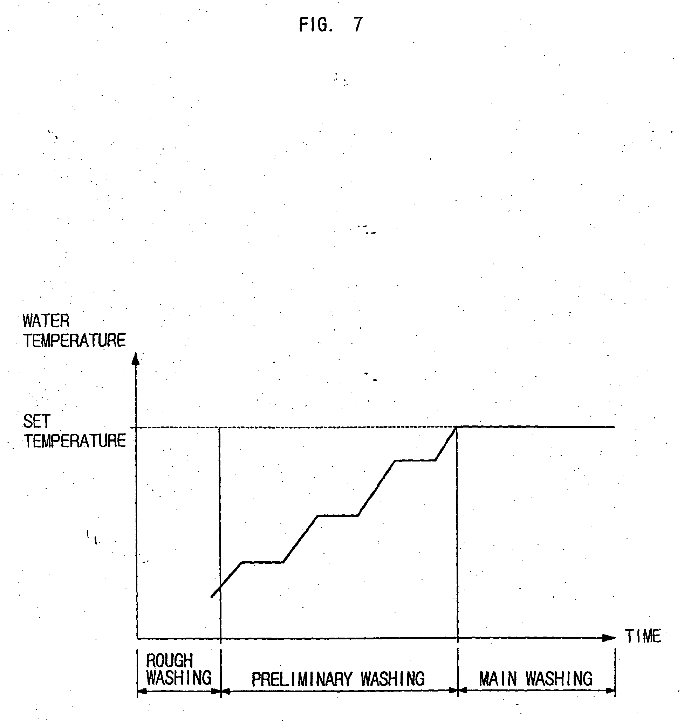

A method of controlling the drum washing machine according to the present invention will now be described with reference to Figures 6 and 7.

Figure 6 is a flowchart showing a method of controlling the drum washing machine of Figure 1 and Figure 7 is a graph showing variations of water temperature while the drum washing machine performs a wash cycle in which water is heated by the electric heater in accordance with a wash cycle selected by a user.

Referring to Figure 6, laundry is placed in the drum and a wash cycle is selected from a plurality of wash cycles using the input unit 85 in operation 101. A desired temperature may also be set. However, even if a user does not input a water temperature and selects only a wash cycle, the microcomputer 81 will determine an appropriate temperature corresponding to the selected wash cycle by locating the information stored in the storage unit 83. The storage unit 83 is a database that stores pre-programmed information about set temperatures corresponding to a plurality of wash cycles.

When a wash cycle has been selected, the microcomputer 81 activates the second supply valve 36 to open a flow passage so that a small amount of water is supplied into the drum 20, and operates the drum motor 13 to rotate the drum at low speed, thus performing a rough washing operation in operation 103. In this case, the rough washing operation is performed by rotating the drum at low speed to allow the laundry to be soaked with the water, thereby carrying out a preliminary wash and allowing the main wash cycle to be efficiently performed later.

The microcomputer 81 activates the first supply valve 34 to open the flow passage over a certain time so that wash water may pass through the detergent container 18 before flowing into the tub. The microcomputer 81 also operates the electric heater 40 to dissolve detergent contained in water in the tub in operation 105.

To reduce the overall wash time, operation 105 is preferably, but not required to be performed together with operation 103. That is, the operation of supplying water directly into the drum 20 and supplying water and detergent into the tub 11 are performed simultaneously, and the electric heater 40 is operated at the same time as the drum 20 rotates.

The microcomputer 81 operates the drum motor to rotate the drum 20 at high speed to force water from the drum through the perforations 25 in operation 107. The water passing out of the drum through the perforations is mixed with detergent solution contained in the lower portion of the tub 11.

After draining water 11 from the drum 20, the microcomputer 81 detects the temperature of the detergent solution contained in the tub 11 using the water temperature sensor 87 and determines whether the detected water temperature is equal to or higher than the set temperature corresponding to the selected wash cycle in operation 111. If, as a result of the determination, the detected water temperature is lower than the set temperature, the microcomputer 81 operates the electric heater 40 during a certain time to reheat the detergent solution contained in the tub, thus increasing the temperature of the detergent solution in operation 113. As the detergent solution is heated by the electric heater 40 in the lower portion of the tub 11, the temperature of the detergent solution increases gradually.

The microcomputer 81 operates the pump motor 52 and the drain valve 61 to allow water to flow from the exit of the pump motor 52 to the circulation pipe 62, so that reheated detergent solution is pumped by the pump motor and sprayed to the laundry in the drum through the spray nozzle 63 in operation 117.

Subsequently, the microcomputer 81 operates the drum motor to perform a preliminary washing operation in which the laundry is washed over a certain time in operation 117, and the process then returns to operation 107. The preliminary washing operation is performed in stages until the detected water temperature reaches the set temperature (see Figure 7). The reason why the preliminary washing operation is employed is so that dirt and stains on the laundry are soaked with the water. For example, when a wash cycle to wash seriously soiled laundry is selected, the set temperature is set to a high value, so that a satisfactory washing effect is achieved by washing the laundry in stages using the detergent solution being gradually heated because the dirt and stains are soaked with the heated water solution.

If, as a result of the determination of the operation 111, the detected water temperature is equal to or higher than the set temperature corresponding to the set wash cycle, the microcomputer 81 performs the main washing operation in which the laundry is washed by operating the drum motor 13 in operation 119. The microcomputer 81 determines whether the main washing operation ends depending on whether a washing time counted by an internal counter reaches a washing end time in operation 121 while performing the main washing operation. If, as the result of the determination, the washing time is found not to have ended, the process returns to operation 119 to continue the main washing operation. If, as the result of the determination, the washing time is found to have ended, the microcomputer 81 finishes main wash cycle, and the process proceeds to operation 123 and performs set rinsing and spin-drying operations thus terminating the selected washing course.

As described above, in the present invention, the operation of dissolving detergent in water in the tub while performing a preliminary wash using a small amount of water supplied to the drum may be performed at the same time, so that overall washing time is reduced, and efficient washing is performed because dry laundry is soaked with water at an early stage.

The drum washing machine of the present invention performs a preliminary wash in which the water is drained from the rotary drum and mixed with detergent solution contained in the water tub. The water mixed with the detergent solution is reheated until a temperature of the wash water mixed with the detergent solution reaches a set temperature. Further, the drum washing machine of the present invention is provided with the structure in which the reheated wash water mixed with the detergent solution is sprayed and supplied into the drum through the circulator. Accordingly, the drum washing machine of the present invention is capable of obtaining a satisfactory washing effect even though a relatively small amount of wash water is used. In particular, the preliminary washing operation is fit to remove dirt and stains from heavily soiled laundry.

Furthermore, the drum washing machine of the present invention is capable of reducing electric energy consumed by the electric heater because a relatively small amount of water is used.

Although a few embodiments of the present invention have been shown and described, it would be appreciated by those skilled in the art that changes may be made in this embodiment without departing from the principles of the invention, the scope of which is defined in the claims and their equivalents.

## Claims

1. A washing machine including a tub (11) containing a rotatably mounted drum (20) to receive laundry to be washed and a water supply unit (30) operable to supply water for washing to the tub (11), **characterised in that** the water supply unit (30) is also configured to separately supply water directly into the drum (20), the washing machine including a controller (81) to control the separate supply of water into the tub (11) and directly into the drum (20).

2. A washing machine according to claim 1, wherein the drum (20) is configured so that water drains from the drum (20) into the tub (11) when a predetermined rotational speed has been reached, the controller (81) being operable to rotate the drum (20) at a speed slower than the predetermined speed to soak laundry placed in the drum (20) in the water supplied directly to the drum (20) and to prevent water supplied directly to the drum (20) from draining into the tub (11).

3. A washing machine according to claim 2, wherein the controller (81) is operable to rotate the drum (20) at a speed exceeding the predetermined speed so that water supplied directly to the drum (20) is drained into the tub (11) to mix with the water supplied to the drum (20).

4. A washing machine according to claim 3, wherein the controller (81) is operable to rotate the drum (20) at a speed exceeding the predetermined speed after the drum (20) has been rotated at a speed less that the predetermined speed for a predetermined period of time.

5. A washing machine according to claim 4, wherein the controller (81) is operable to determine the temperature of the water in the tub (11) mixed with the water supplied to the drum (20) and to initiate a main wash cycle when the temperature exceeds a predetermined temperature.

6. A washing machine according to claim 5, including a heater (40) for heating water in the tub (11), wherein the controller (81) is operable to heat the water in the tub (11) mixed with the water supplied to the drum (20) when the temperature is below a predetermined temperature.

7. A washing machine according to claim 6, wherein the controller (81) is operable to initiate a preliminary wash cycle whilst the water in the tub (11) mixed with the water in the drum (20) is being heated and until the predetermined temperature is reached or exceeded.

8. A washing machine according to any preceding claim wherein the controller (81) is operable to control the water supply unit (30) to supply water into the tub (11) and directly into the drum (20) simultaneously.

9. A method of controlling a washing machine including a tub (11) containing a rotatably mounted drum (20) to receive laundry to be washed and a water supply unit (30) operable to supply water for washing to the tub (11), the method including the steps of controlling the water supply unit (30) to supply water into the tub (11), **characterised in that** the method also includes the step of controlling the water supply unit (30) to supply water directly into the drum (30).

10. A method according to claim 9, wherein the drum (20) is configured so that water drains from the drum (20) into the tub (11) when a predetermined rotational speed has been reached and the method includes the step of rotating the drum (20) at a speed slower than a predetermined speed to soak laundry placed in the drum (20) in the water supplied directly to the drum (20) and to prevent water supplied directly to the drum from draining into the tub (11).

11. A method according to claim 10, including the step of rotating the drum (20) at a speed exceeding the predetermined speed so that water supplied directly to the drum (20) is drained into the tub (11) to mix with the water supplied to the drum (20).

12. A method according to claim 11, including the step of rotating the drum (20) at a speed exceeding the predetermined speed after the drum (20) has been rotated at a speed less than the predetermined speed for a predetermined period of time.

13. A method according to claim 11 or 12, including the step of determining the temperature of the water in the tub (11) mixed with the water supplied to the drum (20) and initiating a main wash cycle if the determined temperature exceeds a predetermined temperature.

14. A method according to claim 13, including the step of heating the water in the tub (11) when the temperature is below a predetermined temperature.

15. A method according to claim 14, including the step of initiating a preliminary wash cycle whilst the water in the tub (11) mixed with the water in the drum (20) is being heated until the predetermined temperature is reached or exceeded.

16. A drum washing machine comprising a water tub to contain wash water, a rotary drum located in the water tub to partially surround the wash water contained in the water tub, a water supplier to supply the wash water into the water tub and to supply the wash water into the rotary drum directly, and a controller to control the water supplier to supply the wash water into the water tub and the rotary drum, respectively, while washing laundry, which has been placed in the rotary drum.

17. The drum washing machine as set forth in claim 16 further comprising a drum driver to rotate the rotary drum and a circulator to supply the wash water contained in the water tub into the rotary drum.

18. The drum washing machine as set forth in claim 17 wherein the controller controls the drum driver and the circulator to mix the wash water contained in the water tub with the wash water of the rotary drum and to supply the mixed wash water in the rotary drum thereafter.

19. The drum washing machine as set forth in claim 17 wherein the controller controls the drum driver to wash laundry using only the wash water supplied into the rotary drum.

20. The drum washing machine as set forth in claim 16 wherein the rotary drum comprises a plurality of perforations to drain the wash water while the rotary drum is rotated and is positioned to be inclined to partially surround the wash water while the rotary drum is stopped.

21. The drum washing machine as set forth in claim 20 wherein the perforations are formed along a radially outer portion of a front wall of the rotary drum.

22. The drum washing machine as set forth in claim 18 further comprising a heater to heat the wash water contained in the water tub, wherein the controller controls the heater to heat the contained wash water and controls the circulator to supply the heated wash water to the rotary drum.

23. The drum washing machine as set forth in claim 22 wherein the heater is an electric heater controlled by the controller.

24. The drum washing machine as set forth in claim 22 further comprising a water temperature sensor to detect temperature of the wash water contained in the water tub, wherein the controller controls the heater to heat the contained wash water in stages until the water temperature detected by the water temperature sensor reaches a set temperature.

25. The drum washing machine as set forth in claim 24 further comprising a washing course setting unit to set a washing course of the laundry, wherein the controller determines the set temperature corresponding to the washing course set by the washing course setting unit.

26. The drum washing machine as set forth in claim 25 further comprising a storage unit to store information about the set temperature corresponding to the washing course, wherein the controller recognizes the set temperature by searching the storage unit.

27. A method of controlling a drum washing machine, the drum washing machine having a water tub to contain wash water and a rotary drum located in the water tub to contain the wash water while the washing machine is stopped and to drain the contained water while the washing machine is rotated comprising producing detergent solution by supplying the wash water and detergent into the water tub and performing a main washing operation to wash laundry that has been placed in the rotary drum using the produced detergent solution and the wash water contained in the rotary drum.

28. The method as set forth in claim 27 further comprising performing a rough washing operation to soak the laundry by supplying the wash water into the rotary drum and operating the rotary drum prior to the main washing operation.

29. The method as set forth in claim 28 further comprising mixing the wash water used in the rough washing operation with the wash water contained in the water tub by draining the wash water, which is used in the rough washing operation, from the rotary drum and supplying the mixed wash water into the rotary drum to be used in the main washing operation.

30. The method as set forth in claim 29 further comprising heating the mixed wash water by operating an electric heater.

31. The method as set forth in claim 30 wherein the heating of the mixed water comprises detecting temperature of the heated wash water and heating the heated wash water in stages until the heated wash water reaches a set temperature.

32. The method as set forth in claim 31 further comprising performing a preliminary washing operation by rotating the rotary drum while heating the mixed water in stages wherein the main washing operation is performed after the preliminary washing operation has been performed.

33. A drum washing machine including a water tub to contain wash water and a rotary drum coaxially located in the water tub to partially surround the wash water contained in the water tub and to rotate in various washing operations comprising a water supplier to supply the wash water into the water tub and the rotary drum, a circulator to circulate the wash water and a controller to control the water supplier to supply the wash water into the water tub and the rotary drum, respectively, while washing laundry, which has been placed in the rotary drum, and to control the circulator to mix the wash water contained in the water tub with the wash water contained in the rotary drum.

34. The drum washing machine as set forth in claim 18 further comprising a drum driver, to rotate the rotary drum, wherein the drum driver is controlled by the controller.

35. The drum washing machine as set forth in claim 34 wherein the rotary drum comprises a perforation to drain the wash water while the rotary drum is rotated, the rotary drum being inclined so as to partially surround the wash water while the rotary drum is stopped.

36. The drum washing machine as set forth in claim 35 wherein the perforation is plural in number and formed along a radially outer portion of a front wall of the rotary drum.

37. The drum washing machine as set forth in claim 33 further comprising a heater to heat the wash water contained in the water tub, a water temperature sensor to detect temperature of the wash water contained in the water tub, a washing course setting unit to set a washing course of the laundry and a storage unit to store information about the set temperature corresponding to the washing course.

38. The drum washing machine as set forth in claim 27 wherein the controller controls the heater to heat the contained wash water and controls the circulator to supply the heated wash water to the rotary drum, the controller controls the heater to heat the contained wash water in stages until the water temperature detected by the water temperature sensor reaches a set temperature, the controller determines the set temperature corresponding to the washing course set by the washing course setting unit and the controller recognizes the set temperature by searching the storage unit.

39. The drum washing machine as set forth in claim 38 wherein the heater is an electric heater controlled by the controller.

40. A method of controlling a drum washing machine, the drum washing machine having a water tub to contain wash water and a rotary drum coaxially located in the water tub to rotate within the water tub and to partially surround the wash water comprising determining if a temperature of the wash water is greater than a set temperature, performing a preliminary washing operation with reheated wash water, if the temperature of the wash water is not greater than a set temperature, and performing a main washing operation if the temperature of the wash water is greater than the set temperature.

41. The method as set forth in claim 40 further comprising setting a washing course before the determining operation and performing a rough washing operation before the determining operation.

42. The method as set forth in claim 40 further comprising dissolving a detergent in water to produce the wash water.

43. The method as set forth in claim 40 further comprising draining the wash water from the rotary tub before the determining operation.

44. The method as set forth in claim 40 wherein performing the preliminary washing operation comprises spraying the reheated wash water into the rotary tub.

45. The method as set forth in claim 40 further comprising performing set rinsing and spin drying operations after the performing the main washing operation.
